# EUROPÄISCHE PATENTANMELDUNG

(11) **EP 4 806 307 A1**
(43) Veröffentlichungstag der Anmeldung: **16.09.2026**
(21) Anmeldenummer: 26156802.6
(22) Anmeldetag: 06.02.2026
(51) Int. Cl.: A47J 31/36, A47J 31/46, A47J 31/60

(54) **BRÜHEINHEIT ZUM WAHLWEISE DRUCKLOSEN BRÜHEN SOWIE GETRÄNKEZUBEREITUNGSVORRICHTUNG MIT EINER SOLCHEN BRÜHEINHEIT UND VERFAHREN ZUM BETRIEB EINER BRÜHEINHEIT**

(30) Priorität: 11.03.2025 DE 102025109273
(71) Anmelder: Eugster/Frismag AG, 8580 Amriswil (CH)
(72) Erfinder: Van de Löcht, Hendrik, 8580 Amriswil (CH); Riessbeck, Wolfgang, 8597 Landschlacht (CH)
(74) Vertreter: Patent- und Rechtsanwälte Behrmann Wagner PartG mbB

(57) **Zusammenfassung**

Brüheinheit für eine Getränkezubereitungsvorrichtung, insbesondere einen Kaffee- und/oder Espressovollautomaten, mit einer Antriebsmechanik zum Verschwenken und/oder linearen Verfahren einer Brühkammer zwischen mehreren Positionen, wobei die Brühkammer einen verschiebbar gegenüber einer Brühkammerwand gelagerten Brühkammerboden aufweist, wobei die Antriebsmechanik eingerichtet ist, um die Brühkammerwand zur dichtenden Anlage an einem Brühkopf zu bringen, die Antriebsmechanik zum Erreichen einer drucklosen Brühposition der Brühkammer, eingerichtet ist, wobei die Antriebsmechanik so ausgebildet ist, dass allein über die Antriebsmechanik die Brühkammer in die drucklose Brühposition überführbar ist, wobei in der drucklosen Brühposition die Brühkammerwand dichtend am Brühkopf anliegt und einem Auslassventil, insbesondere ein Cremaventil, ein Umgehungskanal zugeordnet ist, durch den Fluid das Auslassventil umgehen kann, insbesondere ohne, dass das Auslassventil in eine Öffnungsstellung überführt ist, und das Auslassventil in der drucklosen Brühposition der Brühkammer in eine Bypassstellung vorgespannt ist, in der der Umgehungskanal geöffnet ist, sodass während eines Brühvorgangs kein Innendruck in der verschlossenen Brühkammer aufbaubar ist.

## Beschreibung

Die vorliegende Erfindung betrifft eine Brüheinheit für Getränkezubereitungsvorrichtung, insbesondere einen Kaffee- und/oder Espressovollautomaten mit den Merkmalen des Oberbegriffs des Anspruchs 1. Die Erfindung betrifft weiterhin eine Getränkezubereitungsvorrichtung, insbesondere einen Kaffee- und/oder Espressovollautomaten, mit den Merkmalen des Oberbegriffs des Anspruchs 13. Weiterhin betrifft die vorliegende Erfindung ein Verfahren zum Betrieb einer Brüheinheit für eine Getränkezubereitungsvorrichtung, insbesondere einen Kaffee- und/oder Espressovollautomaten mit den Merkmalen des Oberbegriffs des Anspruchs 14.

Aus dem Stand der Technik sind bereits eine Vielzahl von, bevorzugt entnehmbaren, Brüheinheiten für Getränkezubereitungsvorrichtungen, insbesondere Kaffeevollautomaten und/oder Espressovollautomaten, bekannt.

Die Brüheinheiten unterscheiden sich im Wesentlichen nach der Art und Weise wie Getränkesubstratmehl, insbesondere Kaffeebohnenmehl oder Kaffeepulver zugeführt wird. Es besteht die Möglichkeit Getränkesubstratmehl lose oder portioniert, insbesondere verkapselt, bereitzustellen.

Im Bereich der Brüheinheiten für Getränkezubereitungsvorrichtungen, die mit losem Getränkesubstratmehl, insbesondere Kaffeebohnenmehl oder Kaffeepulver, ohne Verkapselung oder Portionsbehälter arbeiten, sind ebenfalls bereits unterschiedliche Konzepte bekannt. Ein weit verbreitetes Konzept ist die sogenannte "Kniehebelbrüheinheit", wobei der Begriff "Kniehebel" aus rein technischer Sicht für solche Brüheinheiten nicht vollkommen zutreffend ist.

Die Grundidee derartiger Brüheinheiten ist, dass die Brühkammer durch Verschwenk- und/oder lineare Translationsbewegungen in unterschiedliche Positionen überführbar ist, wobei für die Durchführung eines Getränkebezugs oder eines Brühvorgangs wenigstens eine Mahlposition vorgesehen ist, in der die Brühkammer der Brüheinheit mit Getränkesubstratmehl befüllt wird oder befüllbar ist. Weiter ist eine Brühposition notwendig, in der die Brühkammer verschlossen ist und Brühfluid in die Brühkammer einströmt und aufgebrühtes oder hergestelltes Getränk aus der Brühkammer abfließen kann. Ferner ist bei sogenannten Vollautomaten eine Ausstoßposition erreichbar, die nach dem Brühvorgang oder Auslaugungsprozess angefahren wird und dazu dient, das in der Brühkammer befindliche Getränkesubstratmehl, welches nach dem Brühvorgang auch als Trester bezeichnet wird, aus der Brühkammer zu entnehmen oder zu entfernen, bevorzugt von einem beweglichen Brühkammerboden abzustreifen.

Bei Halbautomaten oder sogenannten Siebträgermaschinen, die ebenfalls mit unverpacktem oder nicht portioniertem Getränkesubstratmehl arbeiten, können die vorgenannten Positionen teilweise nur erreicht werden, wenn der Bediener oder Benutzer tätig wird und den Siebträger bedient. Bei Vollautomaten hingegen ist vorgesehen, dass die vorangehend beschriebenen Schritte und dazugehörigen Positionen automatisch und selbstständig, insbesondere nach einmaligem Initiieren eines Brühvorgangs, erreicht oder eingestellt werden.

Bei den bekannten Brüheinheiten ist in der Regel ein Auslassventil, insbesondere ein Cremaventil, mit dem Inneren der Brühkammer, beispielsweise im Bereich des dichtend mit der Brühkammerwand zur Anlage kommenden Brühkopfes, vorgesehen, welches erst bei Erreichen eines vorgegebenen oder eingestellten Innenüberdrucks innerhalb der Brühkammer öffnet und den Abfluss oder die Ausgabe eines aufgebrühten Getränks ermöglicht. Eine Getränkezubereitung, wie beispielsweise bei klassischem Filterkaffee, mit einem Aufgießen oder Aufbrühen des Getränkesubstratmehls ohne Druck ist hingegen nicht möglich.

Ausgehend davon ist folglich die Aufgabe der vorliegenden Erfindung eine Brüheinheit für eine Getränkezubereitungsvorrichtung, eine Getränkezubereitungsvorrichtung und ein Verfahren zum Betrieb einer Brüheinheit für eine Getränkezubereitungsvorrichtung vorzuschlagen, die die Nachteile im Stand der Technik überwinden und insbesondere die Vielfalt an herstellbaren Getränken oder Getränkevarianten vergrößern.

Diese Aufgabe wird im Hinblick auf eine Brüheinheit für eine Getränkezubereitungsvorrichtung mit den Merkmalen des Anspruchs 1 gelöst. Bezüglich der Getränkezubereitungsvorrichtung wird die Aufgabe mit den Merkmalen des Anspruchs 13 gelöst. Im Hinblick auf ein Verfahren zum Betrieb einer Brüheinheit wird die Aufgabe mit den Merkmalen des Anspruchs 14 gelöst.

Vorteilhafte Ausführungsformen der Erfindung sind Gegenstand der nachfolgenden Beschreibung, der Figuren, der Figurenbeschreibung sowie der Unteransprüche.

Insgesamt sollen, auch zur Vermeidung von unnötigen Wiederholungen, alle nachfolgend vorrichtungsmäßig offenbarten Merkmale als auch entsprechend verfahrensmäßig offenbart und beanspruchbar gelten, sowie umgekehrt.

Die Brüheinheit gemäß der vorliegenden Erfindung, welche zum Einsatz mit oder in einer Getränkezubereitungsvorrichtung, insbesondere einem Kaffee- und/oder Espressovollautomaten, geeignet ist umfasst eine Antriebsmechanik zum Verschwenken und/oder linearen Verfahren einer Brühkammer zwischen mehreren Positionen, wobei die Brühkammer einen verschiebbar gegenüber einer Brühkammerwand gelagerten Brühkammerboden aufweist, wobei die Antriebsmechanik eingerichtet ist, um die Brühkammerwand zur dichtenden Anlage an einem Brühkopf zu bringen.

Erfindungsgemäß ist dabei vorgesehen, dass die Antriebsmechanik zum Erreichen einer drucklosen Brühposition der Brühkammer eingerichtet ist, wobei die Antriebsmechanik so ausgebildet ist, dass allein über die Antriebsmechanik die Brühkammer in die drucklose Brühposition überführbar ist, wobei in der drucklosen Brühposition die Brühkammerwand dichtend am Brühkopf anliegt und einem Auslassventil, insbesondere einem Cremaventil, ein Umgehungskanal zugeordnet ist, durch den Fluid das Auslassventil umgehen kann, insbesondere ohne, dass das Auslassventil in eine Öffnungsstellung überführt ist, und das Auslassventil in der drucklosen Brühposition der Brühkammer in eine Bypassstellung vorgespannt ist, in der der Umgehungskanal geöffnet ist, sodass während eines Brühvorgangs kein Innendruck in der verschlossenen Brühkammer aufbaubar ist.

Die Erfindung hat in überraschender Weise erkannt, dass über die drucklose Brühposition der Brühkammer und gleichzeitiger Umgehung des Auslassventils, insbesondere Cremaventils, über den Umgehungskanal auch die Durchführung von drucklosen Brühvorgängen möglich ist, bei denen dann ein Getränk hergestellt wird, welches, ähnlich dem Aufgießen oder Aufbrühen von Filterkaffee, ohne Druck hergestellt wird, beispielsweise keinen Schaum oder keine Crema aufweist und auch ansonsten deutlich unterschiedliche Eigenschaften aufweist. Beispielsweise ist die Erzeugung von klarem Kaffee mit weniger Bitterkeit und Säure möglich, die sich durch die potentiell geringe Kontaktzeit des Fluides oder Brühfluids, bevorzugt Wasser, mit dem Getränkesubstratmehl, auch von klassischem Filterkaffee nochmals deutlich abgrenzt.

Darüber hinaus hat die Erfindung erkannt, dass - wie weiter unten ausführlich beschrieben - durch die zusätzliche drucklose Brühposition mit samt des umgehbaren, normalerweise geschlossenen Auslassventils auch Getränkevariationen möglich werden, die nicht vollständig über den gesamten Brühprozess sondern nur teilweise in der drucklosen Brühposition hergestellt werden und ansonsten beispielsweise in einer Weise hergestellt werden, in der das Auslassventil nicht überbrückt oder umgehbar ist und dementsprechend nur öffnet, wenn ein entsprechender Überdruck im Inneren der Brühkammer existiert oder vorliegt.

Eine besondere Leistung der Erfindung besteht darin, dass diese deutliche Erweiterung des Spektrums an herzustellenden oder herstellbaren Getränken mit minimalem konstruktivem Aufwand erreicht wird und problemlos in bestehende Brüheinheit-Konzepte integrierbar ist.

Besonders an der Erfindung ist auch, dass das Auslassventil und der zugeordnete Umgehungskanal in einem von außen ansonsten unbeeinflussten Ausgangs- oder Grundzustand eben gerade nicht aktiviert ist und das Auslassventil die eigentliche Ventilfunktion nicht ausführt, sondern als normalerweise umgehbares Ventil ausgebildet ist, welches erst aktiviert wird oder als Ventil wirkt, wenn der Umgehungskanal geschlossen wird. Dies ermöglich zum Beispiel Vorteile bei der Belüftung und Entlüftung der geschlossenen Brühkammer - Brühkammerwand am Brühkopf dichtend anliegend - da Luftkissen vor dem Brühvorgang besser entweichen können.

Außerdem kann die Hygiene verbessert werden, da - wie weiter unten noch im Detail beschrieben wird - über das normalerweise- umgehbare Auslassventil eine Rücksaugfunktion von Fluid jenseits des Auslassventils zurück in die Brühkammer ermöglicht wird. Denn, wie unten noch im Detail ausgeführt, kann drucklose Brühposition der Brühkammer, die zwar eine geschlossene Brühkammer im Hinblick auf die dichtende Anlage des Brühkopfes an der Brühkammerwand aufweist, auch genutzt werden, um die Brühkammer als Saugkammer oder gar als Unterdruckkammer zu verwenden, wenn nämlich über eine Vergrößerung der Brühkammer, bevorzugt über eine Verstellung des Brühkammerbodens gegenüber der Brühkammerwand, ein Sog entsteht, der über den Umgehungskanal auch auf einen, bevorzugt geräteseitigen, Auslauf jenseits des Auslassventils wirken kann.

Im Anschluss an einen Brühvorgang, bevorzugt ausgehend von der drucklosen Brühposition der Brühkammer, kann zudem ein Saugvorgang durchgeführt werden. Dazu wird die Brühkammer vergrößert, zum Beispiel durch eine Verstellung des der Brühkammerbodens. Gleichzeitig oder nachfolgend kann das Auslassventil durch den Rückstellmechanismus in die Bypassstellung vorgespannt werden oder vorgespannt verharren. Dies kann vorteilhaft dadurch erreicht werden, dass die Brühkammer in die drucklose Brühposition überführt wird oder verbleibt. Dadurch wird das an sich geschlossene Auslassventil über den zugeordneten Umgehungskanal umgehbar und die Volumenarbeit oder Volumenvergrößerung in der noch am Brühkopf abgedichteten Brühkammer erzeugt einen Unterdruck, der sich über den Umgehungskanal auch bis in einen Auslauf der Getränkezubereitungsvorrichtung erstreckt. Dadurch kann Restfluid unterschiedlichsten Ursprungs, bevorzugt Restgetränk, aus dem Auslauf über den Umgehungskanal zurück in die Brühkammer gesaugt werden. Von dort aus kann eine Drainage oder ein Ausschleusen zusammen mit Trester erfolgen. Dadurch kann die Getränkequalität verbessert werden, weil im Auslauf keine Restfluide zurückbleiben. Außerdem kann dadurch die Hygiene verbessert werden. Wie mit Bezug zur Getränkezubereitungsvorrichtung noch eingehender Beschrieben kann dadurch auch eine erhöhte Variabilität bezüglich der Konstruktion der Getränkezubereitungsvorrichtung erreicht werden, die unter anderem zu kompakteren Getränkezubereitungsvorrichtungen führen kann.

In einer weiteren, besonders vorteilhaften Ausgestaltung der Brüheinheit kann vorgesehen sein, dass wenigstens ein Hydraulikzylinder vorgesehen ist, der den Brühkammerboden vor und/oder während der Getränkeherstellung in Richtung des Brühkopfes kraftbeaufschlagt.

Es hat sich als besonders vorteilhaft erwiesen, wenn die Brüheinheit nicht rein mechanisch aufgebaut ist, sondern wenigstens teilweise hydraulisch betrieben wird. Dabei ist es besonders vorteilhaft, wenn die hydraulischen Komponenten, wie der vorteilhafte Hydraulikzylinder, genutzt wird, um hohe Kräfte und Drücke aufseiten der Brüheinheit zu erzeugen oder aufzunehmen/abzuleiten.

Dies ermöglicht einen energieeffizienten Betrieb der Brüheinheit und erlaubt insbesondere, dass die Antriebsmechanik und ein dazugehöriger, bevorzugt geräteseitiger, Antrieb die Bewegung der Brühkammer, insbesondere die Verstellung und/oder Verschwenkung der Brühkammer, innerhalb der Brüheinheit im Wesentlichen kraftlos bewirken kann. Im Zusammenhang mit der vorliegenden Erfindung ermöglicht dies in besonders vorteilhafter Weise auch, dass die Verstellung zwischen den unterschiedlichen Positionen der Brühkammer allein über die Antriebsmechanik erreicht werden kann und beispielsweise zum Erreichen der drucklosen Brühposition und/oder zur Erreichung von anderen Brühpositionen oder Positionen der Brühkammer der Hydraulikzylinder weitestgehend inaktiv verbleiben kann. Besonders vorteilhaft kann vorgesehen sein, dass der Hydraulikzylinder zum Verdichten oder Tampern des Getränkesubstratmehls zum Aufbau eines Gegendrucks zum steigenden Innendruck innerhalb einer Brühkammer während des Brühprozesses und gegebenenfalls zum Verstellen des Brühkammerbodens in eine Auswurfposition - wie nachfolgend noch beschrieben - eingerichtet ist und genutzt wird.

Wie bereits angedeutet, kann eine weitere, besonders vorteilhafte Ausführungsform der Brüheinheit vorsehen, dass der Hydraulikzylinder derart ausgebildet ist, dass eine Verstellung des Brühkammerbodens bis zu einem oberen Rand der Brühkammerwand möglich ist. Dadurch wird in vorteilhafter Weise erreicht, dass der Brühkammerboden für alle notwendigen Funktionen und für alle notwendigen Positionen bis hin zu einer Auswurf- oder Abstreifposition, in der ein Getränkesubstrat oder Trester nach dem Brühvorgang ausgeworfen oder abgestreift wird, allein über die Hydraulik der Brüheinheit, insbesondere den Hydraulikzylinder verstellt oder betätigt wird.

Eine weitere, besonders vorteilhafte Ausgestaltung der Brüheinheit kann vorsehen, dass in einem ersten Hydraulikzylinder ein zweiter Hydraulikzylinder angeordnet ist, der zusammen mit dem ersten Hydraulikzylinder eine teleskopartige Verstellung des Brühkammerbodens ermöglicht, wobei die Hydraulikzylinder gemeinsam eine Verstellung des Brühkammerbodens bis hin zum oberen Rand der Brühkammerwand ermöglichen. Die derartige Anordnung von zwei Hydraulikzylindern ineinander und hydraulisch in Serie geschaltet hat besondere Vorteile bezüglich der zu erzeugenden Kräfte, des Steuerungsaufwands und des Fluidverbrauchs.

In einer weiteren, besonders vorteilhaften Ausgestaltung der Brüheinheit kann vorgesehen sein, dass der erste Hydraulikzylinder und/oder zweite Hydraulikzylinder einen, bevorzugt gemeinsamen, Fluideinlass aufweist/aufweisen, der fluidleitend mit einer Fluidzuleitung der Getränkezubereitungsvorrichtung verbindbar ist, wobei der/die Hydraulikzylinder mit einem ausgangsseitigen, bevorzugt gemeinsamen, Gegendruckventil versehen ist/sind, welches in fluidleitender Verbindung mit der Brühkammer ausgebildet ist und welches beim Überschreiten eines Grenzdrucks die Zufuhr von Fluid in die Brühkammer freigibt, sodass Fluid aus dem/den Hydraulikzylinder(n) abfließt und in die Brühkammer einströmt. Dadurch kann eine besonders einfache Fluidführung erreicht werden, die zudem einen sehr effektiven Einsatz von Fluid ermöglicht, wobei das Fluid dann in unterschiedlichen Baugruppen oder unterschiedlichen zeitlichen Situationen unterschiedliche Funktionen erfüllt, nämlich beispielsweise Hydraulikfluid, Spülfluid oder Brühfluid. Als Fluid kommt in der Regel Wasser zum Einsatz. Wenn ein Gegendruckventil am Übergang zur Brühkammer vorgesehen ist, wird dadurch auch ein konstanter Tamperdruck erreicht, der nicht von der Menge an Getränkesubstratmehl in der Brühkammer abhängig ist.

In einer vorteilhaften Ausführungsform kann vorgesehen sein, dass der Fluideinlass unverzweigt mit einer Fluidzuleitung einer Getränkezubereitungsvorrichtung verbunden ist. Auch dadurch wird in besonders vorteilhafter Weise ein einfaches Fluidsystem und eine minimale Steuerungs- und Regeltechnik zur Leitung und Führung des Fluides, insbesondere innerhalb der Brüheinheit, ermöglicht.

In einer weiteren, besonders vorteilhaften Ausgestaltung der Brüheinheit kann vorgesehen sein, dass die Antriebsmechanik zur Verstellung der Brüheinheit in eine Crema-Brühposition eingerichtet ist, wobei die Antriebsmechanik so ausgebildet ist, dass allein über die Antriebsmechanik, insbesondere ohne Verstellung der/des Hydraulikzylinder(s) die Brühkammer, insbesondere die Brühkammerwand, zur dichtenden Anlage an den Brühkopf bringbar ist, wobei der Umgehungskanal des Auslassventils geschlossen ist und das Auslassventil nur in eine Öffnungsstellung überführbar ist, wenn im Inneren der Brühkammer ein vorgegebener Überdruck existiert. Wie oben bereits mehrfach angedeutet, kann es für die Vielfalt der erzeugbaren Getränke besonders vorteilhaft sein, wenn das Auslassventil sowohl die Funktionalität eines Gegendruckventils oder Überdruckventils einnehmen kann, was durch die Crema-Brühposition der Brühkammer ermöglicht wird, wobei dann beim Einführen oder Einfüllen von Brühfluid in die Brühkammer der Auslass oder ein Ausgang der Brühkammer nur geöffnet wird, wenn ein entsprechender Innendruck oder Überdruck im Inneren der Brühkammer herrscht. Weiter ist es erfindungsgemäß vorteilhaft, wenn zudem in einer alternativen Brühposition der Brühkammer, nämlich in der drucklosen Brühposition der Brühkammer, das besagte Auslassventil umgehbar ist, sodass dann ein Aufbrühen ohne Überdruck und gegebenenfalls zusätzlich mit verhältnismäßig kurzen Kontaktzeiten zwischen Getränkesubstratmehl und Brühfluid, insbesondere heißem Wasser, stattfindet, sodass ein besonders mildes Getränk, beispielsweise in Form eines besonders milden, grundsätzlich einem Filterkaffee ähnlichen, Kaffee hergestellt werden kann.

In einer vorteilhaften Ausgestaltung der Brüheinheit kann vorgesehen sein, dass die Brühkammer, bevorzugt die Brühkammerwand, das Auslassventil, insbesondere aus der Bypassstellung, in eine geschlossene Position überführt und den Umgehungskanal schließt, wenn die Antriebsmechanik die Brühkammer in die Crema-Brühposition verstellt. Mit anderen Worten ausgedrückt bedeutet dies, dass die Crema-Brühposition der Brühkammer und deren Erreichen oder Anfahren über die Antriebsmechanik direkt und unmittelbar kausal für das Aktivieren des Auslassventils durch Verschließen des Umgehungskanals ist. Folglich wird das Auslassventil als normalerweise geschlossenes Ventil aktiviert, immer dann oder automatisch dann, wenn die Brühkammer der Brüheinheit in die Crema-Brühposition überführt wird, was abermals ausschließlich durch die Bewegung oder Verstellung der Brühkammer durch die Antriebsmechanik erreicht wird. Dadurch wird in besonders vorteilhafter Weise die Steuer- und Regelungstechnik und der diesbezügliche Aufwand minimiert. Denn sobald die Brühkammer in die Crema-Brühposition verstellt wird, wird auch das Auslassventil aktiviert und der Umgehungskanal geschlossen. Gleichzeitig wird auch, wie oben bereits angedeutet, ein Wechsel zwischen der drucklosen Brühposition und Crema-Brühposition ermöglicht, lediglich durch die Steuerung der Antriebsmechanik und der daraus resultierenden Verstellung der Brühkammer innerhalb der Brüheinheit.

Demnach kann auch nach einem Brühvorgang ausgehend von der Crema-Brühposition der Brühkammer ein Saugfunktion, wie oben beschrieben erreicht werden, wenn zum Abschluss oder nach Abschluss des Brühvorgangs die Brühkammer in die drucklose Brühposition verstellt wird.

In einer weiteren, vorteilhaften Ausgestaltung der Brüheinheit kann vorgesehen sein, dass beim Überführen der Brühkammer in die Crema-Brühposition die Brühkammerwand, bevorzugt ein oberer Rand der Brühkammerwand, einen unmittelbar mit dem Auslassventil verbundenen Mitnehmer verstellt, der wiederum das Auslassventil gegen einen Rückstellmechanismus, bevorzugt aus der Bypassstellung des Auslassventils, verstellt, wobei die Verstellung des Auslassventils den Umgehungskanal verschließt. Dadurch wird in einfacher Weise eine rein mechanische Steuerung zur Umgehung oder Aktivierung des Auslassventils erreicht, die wiederum lediglich von der Position oder Positionierung der Brühkammer innerhalb der Brüheinheit abhängt und folglich allein über die Bedienung und Ansteuerung der Antriebsmechanik erreicht werden kann. Dies bedeutet auch, dass in vorteilhafter Weise die Antriebsmechanik auch zur Überführung der Brühkammer in weitere Brühpositionen eingerichtet sein kann, wobei dann lediglich sicherzustellen ist, dass die Brühkammer, insbesondere ein oberer Rand der Brühkammerwand, den Mitnehmer nicht kontaktiert oder zumindest nicht verstellt, sodass dann bei einem immer noch dichtend am Brühkopf anliegenden Zustand der Brühkammerwand das Auslassventil nicht zwangsgeöffnet oder umgehbar ist und folglich während eines Brühvorgangs der Innendruck in der verschlossenen Brühkammer ansteigt, bis das Auslassventil, bevorzugt selbstständig oder selbsttätig, öffnet.

Somit ist eine sehr einfache und direkte mechanische Aktivierung des Auslassventils ermöglicht. Die Kräfte zum Überwinden des Rückstellmechanismus des Auslassventils sind um ein Vielfaches kleiner, als beispielsweise die Kräfte, die in einer vollständig mechanischen Brüheinheit, insbesondere während des Brühprozesses, auftreten. Die Kräfte die vom Rückstellmechanismus bereitgestellt und dementsprechend von der Brühkammer über die Antriebsmechanik überwunden werden müssen, können sich beispielsweise auf die Dichtkräfte beschränken, die notwendig sind, um den Umgehungskanal abzudichten, wenn das Auslassventil verstellt ist. Dementsprechend können als Rückstellmechanismus schwache Federn, beispielsweise Wendelfedern, zum Einsatz kommen. Diese oder der Rückstellmechanismus an sich muss/müssen nur stark genug sein, um das Auslassventil wieder in die Bypassstellung vorzuspannen, wenn die Brühkammer und/oder die Antriebsmechanik die Brühposition verlässt, damit das Auslassventil wieder in die normalerweise-umgehbare Stellung vorgespannt wird. Somit kann in besonders vorteilhafter Weise ein geräteseitiger Antrieb zum Einsatz kommen, der sehr wenig Kraft aufbringen muss oder bereitstellen muss. Denn durch den Hydraulikzylinder, der auf den beweglich in der Brühkammer gelagerten Brühkammerboden wirkt, kann ein Großteil der Kräfte, die während des Brühprozesses auftreten oder notwendig sind, aufgenommen und abgeleitet werden. Somit kann die Antriebsmechanik die Brühkammer kraftlos schließen und dichten und annähernd kraftlos oder mit äußerst geringen Kräften die Schließstellung und die Bypassstellung des Auslassventils anfahren, verlassen und/oder herstellen.

In einer weiteren, besonders vorteilhaften Ausgestaltung der Brüheinheit kann vorgesehen sein, dass die Antriebsmechanik zum Erreichen einer ersten Spülposition der Brühkammer eingerichtet ist, wobei die erste Spülposition der drucklosen Brühposition entspricht. Dies erlaubt, insbesondere bei einer Kombination mit einem Hydraulikzylinder, dass in der ersten Spülposition das Auslassventil umgehbar ist und dementsprechend zunächst die Brühkammer in ihrem Volumen minimiert wird, indem der Hydraulikzylinder/die Hydraulikzylinder ohne entsprechenden Gegendruck vonseiten der Brühkammer bis zu einem Maximum verstellt wird/werden und dementsprechend den Brühkammerboden maximal verschiebt/verschieben, gegebenenfalls bis an einen vom Brühkopf ausgehenden Anschlag. Erst dann wird Fluid als Spülfluid, bevorzugt von dem Hydraulikzylinder/den Hydraulikzylindern in die Brühkammer mit minimalem Volumen eingeleitet. Damit kann für einen Spülvorgang das Spülvolumen des benötigten Spülfluids, bevorzugt Spülwassers, minimiert werden.

Vorteilhaft kann eine Saugfunktion an einen Spülvorgang angeschlossen werden, bei dem die Brühkammer in die erste Spülposition überführt wird oder in dieser verbleibt, in der der Umgehungskanal geöffnet ist. Eine Volumenvergrößerung der Brühkammer, bevorzugt durch eine Verstellung des Brühkammerbodens, führt dann zu einem Unterdruck in der Brühkammer, der Restspülfluid aus dem Auslauf der Brüheinheit und/oder aus dem Auslauf der Getränkezubereitungsvorrichtung zurück in die Brühkammer saugt. Dadurch kann die Getränkequalität von nachfolgend hergestellten Getränken und die Hygiene im Bereich des Auslaufs verbessert werden.

Besonders bevorzugt kann vorgesehen sein, dass während des Spülens der Brühkammer in eine erste Spülposition der Brühkammer der erste und/oder der zweite Hydraulikzylinder befüllt sind und der Brühkammerboden einen minimierten Abstand zum Brühkopf aufweist. Bevorzugt beträgt der Abstand zwischen Brühkammerboden und Brühkopf weniger als 2mm, bevorzugt weniger als 1mm. Bevorzugt kann, wie bereits angedeutet, der Abstand über einen Anschlag definiert werden, der sich ausgehend vom Brühkopf in die Brühkammer erstreckt.

In einer weiteren, besonders vorteilhaften Ausführungsform der Brüheinheit kann vorgesehen sein, dass die Antriebsmechanik zum Erreichen einer zweiten Spülposition der Brühkammer eingerichtet ist, wobei die zweite Spülposition der Crema-Brühposition der Brühkammer entspricht. Dadurch wird in vorteilhafter Weise erreicht, dass auch ein Spülen der Brühkammer ermöglicht wird, bei dem der Auslass der Brühkammer über das Auslassventil nur geöffnet wird, wenn im Inneren der Brühkammer ein entsprechender Überdruck herrscht. Folglich wird ein derartiger Spülvorgang oder Spülprozess gegen einen Innendruck in der Brühkammer, im Wesentlichen hervorgerufen durch ein verdichtetes Luftpolster, durchgeführt, wodurch die Größe der Brühkammer, insbesondere das Volumen der Brühkammer, im Vergleich zum vorangehend beschriebenen Spülprozess deutlich größer ausfällt, weil der/die Hydraulikzylinder nicht ohne Gegendruck bis zu einem Maximum verstellt oder verfahren werden können.

Auch hier kann vorgesehen sein, dass im Anschluss an das eigentliche Spülen zunächst noch die erste Spülposition der Brühkammer eingenommen wird, um eine Saugfunktion zu ermöglichen, so dass Restspülfluid aus dem Auslauf zurück in die Brühkammer gefördert oder gesaugt wird.

Das oben genannte Problem wird auch durch eine Getränkezubereitungsvorrichtung, insbesondere einen Kaffee- und/oder Espressovollautomat mit einer, insbesondere entnehmbaren, Brüheinheit und einem fest verbauten Antrieb zum Antrieb einer Antriebsmechanik der Brüheinheit gelöst, wobei der Antrieb Kopplungsmittel zum, bevorzugt lösbaren, Koppeln mit der Brüheinheit umfasst.

Erfindungsgemäß ist dabei vorgesehen, dass die Brüheinheit nach einer der vorangehend beschriebenen Ausführungsformen ausgebildet ist.

Bezüglich der Vorteile, vorteilhaften Wirkungen und Einzelheiten wird auf die vorangehende Beschreibung der Brüheinheit verwiesen. Insgesamt ermöglicht die Getränkezubereitungsvorrichtung ein deutlich erweitertes Spektrum an herstellbaren Getränken, die sowohl in einer während des Brühvorgangs unter Druck stehenden Brühkammer als auch in einer während des Brühvorgangs drucklosen Brühkammer sowie Kombinationen daraus hergestellt werden.

Die Getränkezubereitungsvorrichtung kann weitere Komponenten und Baugruppen umfassen, die gattungsgemäß und an sich bekannt sind. Diese umfassen beispielsweise einen Vorratsbehälter, beispielsweise für Kaffeebohnen, eine Mühle oder Mahleinheit, eine Fluidpumpe, eine Heizeinrichtung zur Erwärmung von Fluid, ein Milchmodul zum Ansaugen, Erwärmen und/oder Aufschäumen von Milch - gegebenenfalls mitsamt einem Milchbehälter - sowie ein Auffangbehälter für Getränkesubstrat/Trester, eine Tropfschale zum Auffangen von Restfluid und einen Fluidvorratsbehälter, insbesondere Wassertank.

Weiterhin können Mittel vorgesehen sein, um die Bedienung zu ermöglichen oder zu erleichtern. Unter anderem können Knöpfe, Schalter und sonstige Eingabeelemente eine Ausgabeeinheit, wie beispielsweise ein Bildschirm oder Display und/oder kombinierte Ein- und Ausgabeeinheiten, wie beispielsweise berührungsempfindliche Displays vorgesehen sein. Ferner können auch Mittel zur Verbindung, insbesondere datentechnische Verbindungen mit anderen elektrischen oder elektronischen Geräten, insbesondere drahtlosen Schnittstellen mit standardisierten Datenprotokollen, wie beispielsweise Bluetooth, RFID, NFC, Wlan und dgl. vorgesehen sein.

In einer weiteren vorteilhaften Ausgestaltung kann vorgesehen sein, dass die Getränkezubereitungsvorrichtung einen geräteseitigen Auslauf aufweist der mit einem Auslauf der Brüheinheit fluidleitend verbunden ist, wobei ein Endabschnitt des Auslaufs der zur Abgabe eines Getränks dient auf einer Höhe angeordnet ist, die, besonders bei eingesetzter Brüheinheit, oberhalb des Auslaufs der Brühkammer angeordnet ist.

Normalerweise wird ein geräteseitiger Auslauf vorgesehen, der unterhalb des Auslaufs der Brüheinheit angeordnet ist, damit Fluid möglichst vollständig unter Schwerkrafteinwirkung zum Endabschnitt des Auslaufs der Getränkezubereitungsvorrichtung fließen. Wie oben bereits ausgeführt, ermöglicht das normalerweise umgehbare Auslassventil mitsamt dem dazugehörigen Umgehungskanal, welches zum drucklosen Brühen verwendet wird, dass eine Saugfunktion ermöglicht oder ein Saugvorgang durchgeführt wird. Damit kann sichergestellt werden, dass Fluid nicht im Auslauf der Getränkezubereitungsvorrichtung verbleibt, selbst, wenn dieser oberhalb der Auslaufs der Brüheinheit angeordnet ist, da der Saugvorgang dieses sicher zurück in die Brühkammer überführt. Daraus resultiert aber auch, dass die Brüheinheit sehr tief in der Getränkezubereitungsvorrichtung angeordnet werden kann und gleichzeitig unterschiedliche große, insbesondre auch sehr hohe, Getränkegefäße, wie beispielsweise Lattemacchiato-Gläser, unter dem Endabschnitt Platz finden können. Damit kann eine geringe Gesamtbauhöhe der Getränkezubereitungsvorrichtung erreicht werden, ohne dass eine Beschränkung hinsichtlich der Getränke oder Getränkegefäße damit einhergeht.

Besonders bevorzugt kann der Endabschnitt des Auslaufs der Getränkezubereitungsvorrichtung höhenverstellbar ausgebildet sein, wobei zumindest auch Höhen einstellbar sind, bei denen der Endabschnitt oberhalb des Auslaufs der Brüheinheit angeordnet ist.

Die oben genannte Aufgabe wird auch ein Verfahren zum Betrieb einer Brüheinheit für eine Getränkezubereitungsvorrichtung, insbesondere einen Kaffee- und/oder Espressovollautomaten mit einer Antriebsmechanik zum Verschwenken und/oder linearen Verfahren einer Brühkammer zwischen mehreren Positionen gelöst, wobei die Brühkammer einen verschiebbar gegenüber einer Brühkammerwand gelagerten Brühkammerboden aufweist, wobei die Antriebsmechanik eingerichtet ist, um die Brühkammerwand zur dichtenden Anlage an einem Brühkopf zu bringen.

Erfindungsgemäß ist dabei vorgesehen, dass die Antriebsmechanik zum Erreichen einer drucklosen Brühposition der Brühkammer, eingerichtet ist, wobei die Antriebsmechanik so ausgebildet ist, dass allein über die Antriebsmechanik die Brühkammer in die drucklose Brühposition überführt wird, wobei in der drucklosen Brühposition die Brühkammerwand dichtend am Brühkopf anliegt und ein Auslassventil, insbesondere ein Cremaventil, ein Umgehungskanal zugeordnet ist, durch den Fluid das Auslassventil umgangen wird, insbesondere ohne, dass das Auslassventil in eine Öffnungsstellung überführt ist, und das Auslassventil in der drucklosen Brühposition der Brühkammer (03) in eine Bypassstellung vorgespannt wird, in der der Umgehungskanal geöffnet ist, sodass während eines Brühvorgangs kein Innendruck in der verschlossenen Brühkammer (03) aufgebaut wird.

Wie oben bereits dargestellt, erlaubt dies die Herstellung von Getränken, bei denen, ähnlich wie bei der Herstellung von Filterkaffee, ein druckloses Überbrühen oder Durchsetzen des Getränkesubstratmehls mit Fluid, insbesondere Brühfluid, besonders bevorzugt heißem oder kaltem Wasser, stattfindet und so Getränke entstehen, die sich deutlich von Getränken unterscheiden, die mit Überdruck oder in einer unter Überdruck stehenden Brühkammer hergestellt werden. Im Vergleich zu klassischem Filterkaffee besteht dabei die Möglichkeit die Kontaktzeit oder Benetzungszeit zwischen Brühfluid, insbesondere Wasser, und Getränkesubstratmehl, etwa Kaffeebohnenmehl sehr kurz zu halten, sodass klare, milde und/oder wenig bittere Getränke, insbesondere Kaffee, hergestellt und abgegeben wird.

In einer weiteren Verfahrensvariante kann vorgesehen sein, dass die Antriebsmechanik die Brühkammer, wenigstens zeitweise, in eine alternative Crema-Brühposition verstellt, wobei die Antriebsmechanik so ausgebildet ist, dass allein über die Antriebsmechanik die Brühkammer, insbesondere die Brühkammerwand, zur dichtenden Anlage an dem Brühkopf gebracht wird, wobei der Umgehungskanal des Auslassventils geschlossen wird und das Auslassventil nur in eine Öffnungsstellung überführt wird, wenn im Inneren der Brühkammer (03) ein vorgegebener Überdruck erzeugt wird. Wie oben bereits angedeutet, kann es sinnvoll sein für unterschiedliche Getränke oder auch innerhalb eines Brühvorgangs oder Bezugs für ein einzelnes Getränk zwischen unterschiedlichen Brühpositionen, bevorzugt zwischen der drucklosen Brühposition und der Crema-Brühposition zu wechseln. Dadurch kann besonders vorteilhaft die Bandbreite an möglichen Getränken noch weiter vergrößert werden.

In einer vorteilhaften Ausführungsform des Verfahrens kann vorgesehen sein, dass die Brühkammer, bevorzugt die Brühkammerwand, das Auslassventil, insbesondere aus der Bypassstellung, in eine geschlossene Position überführt und den Umgehungskanal schließt, wenn die Antriebmechanik die Brühkammer in die Crema-Brühposition, verstellt. Dadurch wird erreicht, dass die Crema-Brühposition der Brühkammer auch gleichzeitig die entsprechende Aktivierung des Auslassventils bedingt oder verursacht und damit eine einfache, bevorzugt mechanische Steuerung des Auslassventils durch die Steuerung der Brühkammer erreicht wird, die wiederum von der Antriebsmechanik verursacht oder hervorgerufen wird.

In einer weiteren, vorteilhaften Ausgestaltung des Verfahrens kann vorgesehen sein, dass beim Überführen der Brühkammer in die Crema-Brühposition die Brühkammerwand, bevorzugt ein oberer Rand der Brühkammerwand einen unmittelbar mit dem Auslassventil verbundenen Mitnehmer verstellt, der wiederum das Auslassventil gegen einen Rückstellmechanismus, insbesondere aus der Bypassstellung, verstellt, wobei die Verstellung des Auslassventils den Umgehungskanal verschließt. Dadurch wird ein gleichermaßen einfacher und effektiver, rein mechanischer Steuermechanismus realisiert, bei dem allein über die Position der Brühkammerwand, insbesondere des oberen Endes oder des oberen Randes der Brühkammerwand die Steuerung oder Umgehung des Auslassventils bewirkt wird.

Außerdem ermöglicht dies, dass beim Verschließen und Öffnen des Umgehungskanals nur minimale Kräfte, aufgebracht werden müssen, weil der Rückstellmechanismus nur in der Lage sein muss Dichtkräfte zu kompensieren, die auftreten, wenn der Umgehungskanal geschlossen und abgedichtet ist.

Besonders vorteilhaft kann bei der Verstellung des Ventils aus der Bypassstellung und beim oder zum Verschließen des Umgehungskanals vorgesehen sein, dass die Brühkammer und/oder die Brühkammerwand bis an einen mechanischen Anschlag verstellt werden. Der Anschlag kann vorteilhaft durch eine Maximalauslenkung des Rückstellmechanismus vorgegeben sein. Der Anschlag wird vorteilhaft kraftlos oder mit minimalem Kraftaufwand, beispielsweise zur Herstellung eines Dichtzustandes zur Abdichtung des Umgehungskanals und zur Überwindung der Rückstellkräfte des Rückstellmechanismus, erreicht. Letztgenannte Kräfte können aber, wir oben bereits beschrieben, sehr gering ausfallen.

In einer weiteren Ausgestaltung des Verfahrens kann zudem vorgesehen sein, dass über eine Nutzereingabe, insbesondere zur Initiierung eines Brühvorgangs und/oder einer Auswahl eines Getränks, festgelegt wird, ob die Antriebsmechanik im Laufe des Brühvorgangs die Brühkammer in die Crema-Brühposition und/oder in die drucklose Brühposition verstellt. Auch kann über die Nutzereingabe die Reihenfolge sowie das jeweilige Verharren in der einen oder anderen Brühposition, also in der drucklosen Brühposition oder in der Crema-Brühposition festgelegt werden. Dadurch kann besonders vorteilhaft anhand von vorgegebenen Rezepten oder Getränketypen die Ansteuerung der Antriebsmechanik und damit die Steuerung der Brühkammer sowie die Steuerung der Brühposition/Brühpositionen vorgegeben werden, sodass eine einzelne Nutzereingabe, beispielsweise ein einzelner Knopfdruck ausreicht, um den nachfolgenden Brühvorgang auszulösen, insbesondere einschließlich der wenigstens einen Brühposition.

Eine weitere vorteilhafte Ausführungsform des Verfahrens sieht vor, dass die Brüheinheit wenigstens einen Hydraulikzylinder umfasst, der den Brühkammerboden vor und/oder während der Getränkeherstellung in Richtung des Brühkopfes kraftbeaufschlagt, wobei die drucklose Brühposition und/oder die Crema-Brühposition erreicht wird, ohne Verstellung des Hydraulikzylinders.

Die vorliegende Erfindung wird nachfolgend anhand von rein schematischen, beispielhaften Ausführungsformen darstellenden Zeichnungen beschrieben werden. Darin zeigen:
- Fig. 1:: eine Schnittdarstellung durch eine erfindungsgemäße Brüheinheit in einer Mahlposition;
- Fig. 2:: einen Schnitt durch eine erfindungsgemäße Brüheinheit in einer Verschlussposition;
- Fig. 3:: eine schematische Schnittdarstellung durch eine erfindungsgemäße Brüheinheit in einer Crema-Brühposition;
- Fig. 4:: eine schematische Schnittdarstellung durch eine erfindungsgemäße Brüheinheit in einer Auswurfposition;
- Fig. 5:: eine schematische Schnittdarstellung durch eine erfindungsgemäße Brüheinheit in einer ersten Spülposition;
- Fig. 6:: eine schematische Schnittdarstellung durch eine erfindungsgemäße Brüheinheit in einer zweiten Spülposition;
- Fig. 7:: eine schematische Perspektivdarstellung einer Brüheinheit in einer Getränkezubereitungsvorrichtung;
- Fig. 8:: eine schematische Schnittdarstellung im Bereich einer Kopplung von Brüheinheit und Getränkezubereitungsvorrichtung;
- Fig. 9:: eine vergrößerte Darstellung einer Schnittdarstellung der Brüheinheit im Bereich des Brühkopfes;
- Fig. 10:: ein vergrößerter Ausschnitt einer Schnittdarstellung durch eine Brüheinheit in einer drucklosen Brühposition der Brühkammer.

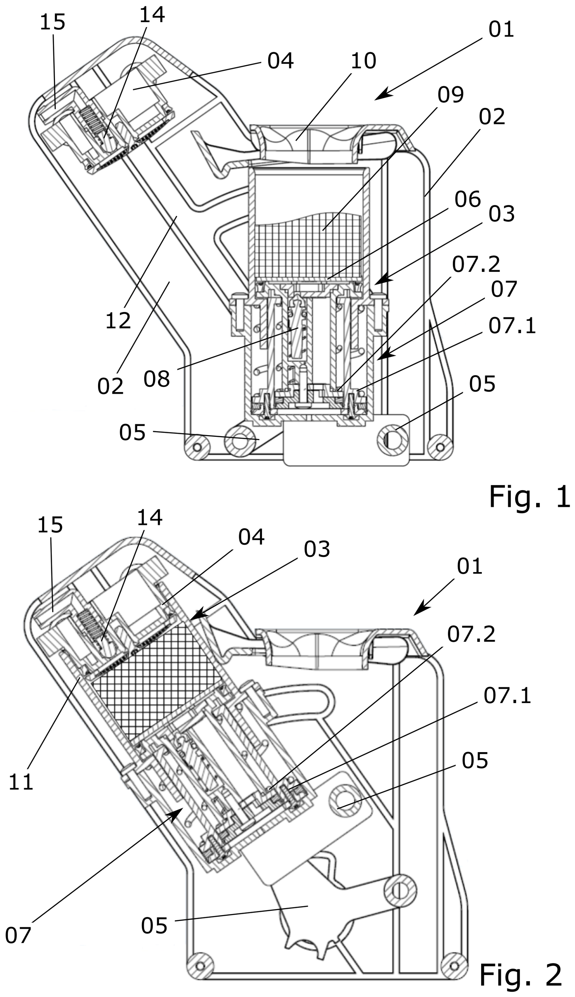

Die Fig. 1 zeigt eine Ausführungsform einer erfindungsgemäßen Brüheinheit 01, die ein Gehäuse 02, eine Brühkammer 03, einen Brühkopf 04 sowie eine Antriebsmechanik 05 aufweist, wobei letztere dazu eingerichtet ist die Brühkammer 03 zu verschwenken und/oder linear zu verfahren.

Die Brühkammer 03, insbesondere ein Brühkammerboden 06 steht in direkter mechanischer Wirkverbindung mit einem Hydraulikzylinder 07. Nachfolgend wird die Erfindung für Brüheinheiten mit Hydraulikzylindern beschrieben werden. Diese sind aber nicht zwingend erforderlich.

Der Hydraulikzylinder 07 ist auf einer Eingangsseite mit einem Brühfluidzufluss fluidleitend verbunden, der nicht im Detail dargestellt ist. Auf einer Ausgangsseite weist der Hydraulikzylinder 07 ein Gegendruckventil 08 auf, dass ermöglicht, dass Hydraulikfluid, welches bevorzugt auch als Brühfluid fungiert und in einem unverzweigten Fluidpfad die Brüheinheit 01 durchströmt, aus dem Hydraulikzylinder 07 abfließt und in die Brühkammer 03 strömt. Als Hydraulik- und/oder Brühfluid kommt bevorzugt Wasser zum Einsatz.

Der Innendruck im Hydraulikzylinder 07, bei dem ein Durchfluss von Hydraulikfluid/Brühfluid in die Brühkammer 03 freigegeben wird, wird somit über die Eigenschaften des Gegendruckventils 08 bestimmt. Über die unmittelbare Einwirkung auf den Brühkammerboden 06 wird damit über das Gegendruckventil 08 auch ein Vorverdichten des Getränkesubstratmehls 09, beispielsweise Kaffeebohnenmehl, definiert. Auch der Druck auf die Brühkammer 03 während des Brühens wird über das Gegendruckventil 08 mitgesteuert, weil nur während des geöffneten Gegendruckventils 08 Brühfluid in die Brühkammer 03 strömen kann. In der Fig. 1 bereits angedeutet ist, dass es sich bei dem Hydraulikzylinder 07 in der Tat um einen ersten Hydraulikzylinder 07.1 und einen zweiten Hydraulikzylinder 07.2 handelt, wobei der zweite Hydraulikzylinder 07.2 so in Serie zum und/oder in dem ersten Hydraulikzylinder 07.1 angeordnet ist dass die Hydraulikzylinder 07.1, 07.2 zusammen eine teleskopartige Verstellung des Brühkammerboden 06 ermöglicht, wobei die Hydraulikzylinder 07.1, 07.2 gemeinsam eine Verstellung des Brühkammerbodens 06 bis zu einem oberen Rand der Brühkammerwand 11 ermöglichen. Die Verstellung oder Aktivierung der Hydraulikzylinder 07.1, 07. 2 wird im Zusammenhang mit den Fig. 2 bis 6 noch näher erläutert werden.

In der Darstellung der Fig. 1 befindet sich die Brüheinheit 01 in einer Mahlposition. Das Gehäuse 02 weist eine Befüllöffnung 10 auf, über die, beispielsweise schwerkraftbedingt, Getränkesubstratmehl 02 von einer Mahleinheit - in der Figur 1 nicht dargestellt - in die Brüheinheit 01 eingefüllt werden kann. In der Brühposition der Fig. 1 kann der Hydraulikzylinder 07 entleert sein. Es kann aber auch vorgesehen sein, dass der Hydraulikzylinder 07 zu Beginn des Mahl- oder Befüllvorgangs mit einer Restmenge von Hydraulikfluid gefüllt ist und abhängig von dem herzustellenden Getränk und der dementsprechenden Ansteuerung der geräteseiteigen, nicht dargestellten Mahleinheit eventuell die Restmenge abgelassen oder verdrängt wird, zum Beispiel, wenn eine besonders große Menge Getränkesubstratmehl eingefüllt werden soll. Dadurch kann bei moderaten Portionen von Getränkesubstratmehl der anschließende Brühvorgang schneller durchgeführt werden, weil weniger zusätzliches Fluid in den Hydraulikzylinder eingefüllt werden muss, beispielsweise um die Brühposition zu erreichen.

Vorteilhaft wird mit einem mechanischen Antriebsmechanik 05 in Kombination mit dem Hydraulikzylinder 07 insgesamt eine sehr kompakte Bauweise der Brüheinheit 01 möglich.

In der Fig. 2 ist die erfindungsgemäße Brüheinheit in einer Verschlussposition dargestellt. Es ist erkennbar, dass der Hydraulikzylinder 07 nicht gefüllt ist, insbesondere weder der erste Hydraulikzylinder 07.1 noch der zweite Hydraulikzylinder 07.2 gefüllt ist. Die Brühkammer 03, insbesondere die Brühkammerwand 11 liegt dichtend an dem Brühkopf 04 an und verschließt damit die Brühkammer 03. In besonders vorteilhafter Weise kann das Verschließen der Brühkammer - der Übergang von der Darstellung der Fig. 1 zur Darstellung der Fig. 2 - kraftlos erfolgen. Dies bedeutet, dass keine mechanischen Rückstellkräfte, Federkräfte oder dergleichen überwunden werden müssen, um den Zustand der Fig. 2 zu erreichen.

Besonders vorteilhaft kann vorgesehen sein, dass ein Verfahrweg zum linearen Verfahren der Brühkammer 03, beispielsweise entlang der in der Fig. 1 dargestellten Führung 12 weniger als 60 mm, bevorzugt weniger als 50 mm beträgt. Durch einen kurzen Verfahrweg kann sichergestellt werden, dass die oben genannten maximalen Abmessungen und das maximale Volumen eingehalten werden und dass das Erreichen der unterschiedlichen Positionen der Brüheinheit innerhalb kurzer Zeitintervalle ermöglicht wird. Besonders vorteilhaft lässt sich ein geringer Verfahrweg von weniger als 60mm mit einem Hydraulikzylinder 07 kombinieren. In der Fig. 2 ist erkennbar, dass die Antriebsmechanik 05 der Brüheinheit 01 so ausgebildet ist, dass die Brühkammer 03 in die dargestellte Verschlussposition überführt werden kann. Einzig und allein dadurch, dass die Antriebsmechanik betätigt oder verstellt wird und insbesondere ohne dass der Hydraulikzylinder betätigt, befüllt oder verstellt wird.

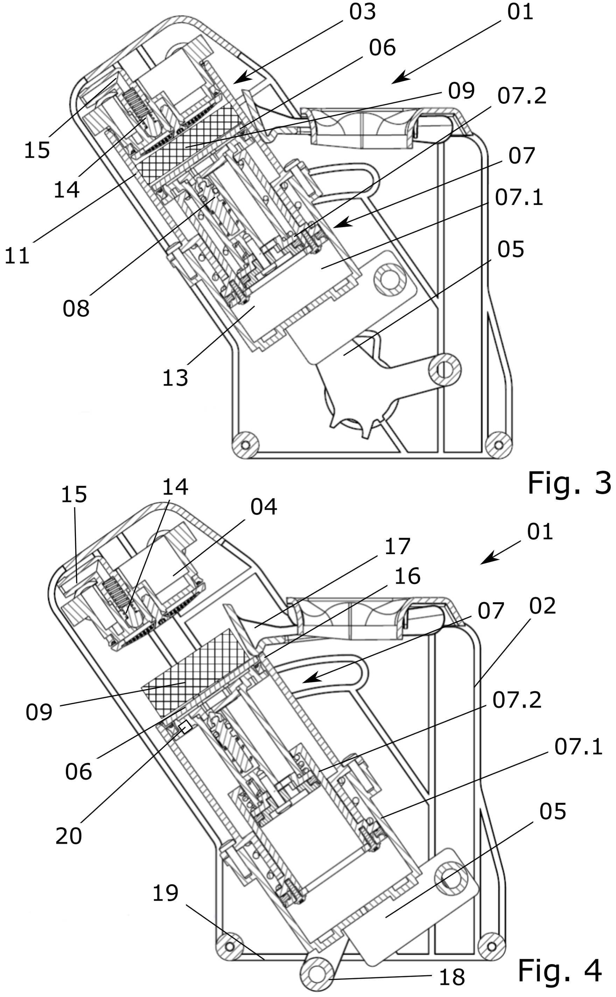

In der Verschlussposition der Brühkammer in der Fig. 2 kann vorgesehen sein, dass das Auslassventil 14 in einer geschlossenen, umgehbaren Stellung und/oder Schaltzustand befindlich ist, wobei die Umgehung über einen nicht im Detail dargestellten Umgehungskanal des Auslassventils 14 erreicht wird. Dies ermöglicht vorteilhaft, dass während des nachfolgenden Tamperns/Verdichten des Getränkesubstratmehls 09 - siehe Zustand, wie in der Fig. 3 dargestellt - kein Gegendruck in der Brühkammer 03 aufgebaut wird und im Getränkesubstrat 09 eingeschlossene Luft einfach durch den Umgehungskanal und den Auslauf 15 entweichen kann. Das Auslassventil 14 an sich, welches als Gegendruckventil ausgebildet ist kann dabei verschlossen bleiben.

Alternativ ist es auch möglich, dass sich die Brühkammer in der Darstellung der Fig. 2 bereits in drucklosen Brühposition befindet. In dieser ist der Umgehungskanal geöffnet und das Auslassventil 14 bleibt geschlossen und umgehbar. In dieser Position könnte ein druckloses Brühen vorbereitet werden.

In der Fig. 3 ist die eine Vorverdichtung des Getränkesubstratmehls 09 abgeschlossen. Die Brüheinheit 01 und insbesondere die Brühkammer 03 kann nun entweder in eine Crema-Brühposition verstellt werden/sein oder in eine drucklose Brühposition verstellt werden/sein oder zwischen diesen Brühpositionen hin- und herverstellt werden. Dadurch wird jeweils in der Crema-Brühposition das Auslassventil aktiviert und der Umgehungskanal geschlossen und in der drucklosen Brühposition das Auslassventil 14 durch den geöffneten Umgehungskanal umgangen. Es ist erkennbar, dass im Hydraulikzylinder 07, der bevorzugt und platzsparend ein unteres Ende der Brühkammer 03 ausbilden kann, in einem unteren Bereich 13 ein Hydraulikfluid, bevorzugt ein Brühfluid mit gleichzeitiger Funktionalität als Hydraulikfluid eingefüllt ist. Dadurch wird der erste Hydraulikzylinder 07.1 verstellt und der Brühkammerboden angehoben. Der zweite Hydraulikzylinder 07. 2 bleibt unverstellt und unbefüllt, da dieser einen kleineren Durchmesser aufweist und daher erst verstellt wird, wenn der erste Hydraulikzylinder 07.1 eine Maximalverstellung erreicht hat und der Innendruck in den Hydraulikzylindern 07.1, 07.2 weiter steigt. Die Verdichtung des Getränkesubstartmehl 09 ist abhängig vom aktiven und nicht umgehbaren Gegendruckventil 08 und damit von der drucklosen Brühposition oder der Crema-Brühposition unabhängig.

Dementsprechend ist in der Fig. 3 der Brühkammermoden 06 innerhalb der Brühkammer 03, insbesondere gegenüber der Brühkammerwand 11 gegenüber der Situation oder Position der Fig. 2 verstellt worden. Dies führt dazu, dass das Getränkesubstratmehl 09 innerhalb der Brühkammer 03 zwischen Brühkopf 04 und Brühkammerboden 06 komprimiert oder getampert wird. Die mechanische Antriebsvorrichtung kann in einen überstreckten oder ansonsten gesicherten Zustand befindlich sein, um sicherzustellen, dass die Antriebsmechanik 05 und/oder der geräteseitige Antrieb zur Erreichung der Brühposition kraftlos und/oder energielos geschaltet werden kann/können und gleichzeitig die Antriebsmechanik 05 als Wiederlager für die Kräfte des Hydraulikzylinders 07 fungieren kann.

Sobald der Innendruck im Hydraulikzylinder 07, insbesondere im unteren Bereich 13 ein Grenzdruck überschreitet, öffnet das Gegendruckventil 08 und das Hydraulikfluid oder Brühfluid kann in die Brühkammer 03 einströmen, beispielsweise durch einen Brühkammerboden 06 mit einer Lochung oder Perforierung. Daraufhin steigt bei der Crema-Brühposition der Brühkammer 03 der Innendruck innerhalb der Brühkammer 03 an, bis das aktivierte Auslassventil 14, das mitunter auch als Cremaventil bezeichnet wird, geöffnet wird. Das Auslassventil 14 kann ebenfalls als Gegendruckventil ausgebildet sein und selbstständig oder selbsttätig öffnen, wenn innerhalb der Brühkammer 03 ein ausreichender Druck vorherrscht oder aufgebaut ist, was einen Verschluss des Umgehungskanals voraussetzt. Über den an das Auslaufventil 14 anschließenden Auslauf 15 kann ein innerhalb der Brühkammer 03 erzeugtes Getränk ausgegeben werden. Zum Druckaufbau im Hydraulikzylinder 07 und/oder der Brühkammer kann eine nicht dargestellt, geräteseitige Pumpe dienen, die Fluid, im Fall eines Brühvorgangs bevorzugt heißes Wasser, in und durch die Komponenten der Brüheinheit 01 pumpt. Alternativ kann das Getränk die Brühkammer 03 durch den Umgehungskanal verlassen, wenn die Brühkammer 03 in der drucklosen Brühposition befindlich ist und das Auslassventil über den Umgehungskanal umgehbar ist.

In der Fig. 4 ist eine Auswurfposition der Brüheinheit 01 dargestellt. Es ist erkennbar, dass die Antriebsmechanik 05 gegenüber der Position der Fig. 3 und 4 linear zurück oder vom Brühkopf 04 wegbewegt wurde. Ein Verschwenken zurück in die Mahlposition der Fig. 1 hat noch nicht stattgefunden. Stattdessen ist eine zusätzliche Betätigung oder Verstellung des Hydraulikzylinders 07 erfolgt und dargestellt. In der Ausführungsform der Fig. 4 ist der zweite Hydraulikzylinder 07.2 teleskopartig zusammen mit dem ersten Hydraulikzylinder 07.1 verstellt und mit Hydraulikfluid gefüllt.

Der zweite Einzelzylinder 07.2 umfasst einen geringeren Durchmesser oder Querschnitt als der erste Einzelzylinder 07.1. Weiterhin kann der erste Einzelzylinder 07.1 ein Anschlag aufweisen, der den Hub des ersten Einzelzylinders 07.1 begrenzt. Da die Brühkammer 03 geöffnet ist, entwickelt sich kein Gegendruck zum Innendruck der Hydraulikzylinder 07.1, 07.2. Beim Einfüllen von Hydraulikfluid in den ersten Hydraulikzylinder 07. 1 fährt dieser bei, ausreichendem Volumen, bis an einen nicht dargestellten Anschlag. Weiter einströmendes Fluid führt dazu, dass der zweite Hydraulikzylinder 07.2 verstellt und gefüllt wird. In der Darstellung der Fig. 4 ist erkennbar, dass über ein Füllen oder Betätigen der beiden Einzelzylinder 07.1, 07.2 der Brühkammerboden 06 so höhenverstellbar gegenüber der Brühkammer 03 oder der Brühkammerwand 11 ist, so dass der Brühkammerboden 06 bis an einen oberen Rand 16 der Brühkammerwand 11 verstellt werden kann. Dies ermöglicht dann, dass ein Auswerfer 17, der bevorzugt als Abstreifer ausgebildet sein kann, zum Abschluss eines Getränkebezugs oder Brühvorgangs den ausgelaugten Trester oder das verbleibende Getränkesubstratmehl 09 auswerfen kann. Die Position des Brühkammerbodens 06 kann mittels eines Magneten 20 in Verbindung mit einem geräteseiteigen - nicht dargestellten - Reed-Sensor erfasst werden.

Die Möglichkeit eines hydraulischen Auswurfs des Getränkesubstratmehls 09 nach dem Brühvorgang ermöglicht weiterhin in vorteilhafterweise eine sehr kompakte Ausgestaltung der Brüheinheit 01. In der Fig. 4 ist nochmals erkennbar, dass der Hydraulikzylinder 07 das untere Ende der Brühkammer 03 ausbildet. Besonders vorteilhaft ist, dass keine zusätzlichen Bauteile, wie beispielsweise ein Stößel, zum Verstellen des Brühkammerbodens 06 bodenseitig über den Hydraulikzylinder 07 hervorragt oder übersteht. Dies bedeutet auch, dass der Bauraum, der zum Einbau der Brüheinheit 07 vorgesehen werden muss ausschließlich oder zumindest ganz wesentlich durch das Gehäuse 02 der Brüheinheit definiert wird und kein zusätzlicher Bauraum vorgesehen werden muss, für Bauteile, die zu gewissen Zeitpunkten des Brühvorgangs wesentlich aus der Brüheinheit 01 oder aus dem Gehäuse 02 der Brüheinheit 01 hervorstehen oder überstehen.

Eine geringfügige Ausnahme bildet ein Hebel 18 der Antriebsmechanik 05, der in der Auswurfposition der Fig. 4 geringfügig über ein Bodenteil 19 des Gehäuses 02 der Brüheinheit 01 übersteht. So kann im Bereich des Bodenteils 19 eine nicht im Detail dargestellte Öffnung oder Ausnehmung im Gehäuse 02 realisiert sein. Abgesehen von einem zeitweisen Hervorstehen oder Überstehen des Hebels 18 kann die Brüheinheit 01 jedoch so realisiert sein, dass keine Bauteile oder Komponenten über die einhüllende Kontur des Gehäuses 02 überstehen oder hervorragen.

Beim Übergang zwischen der Darstellung der Fig. 3 zu der Fig. 4 kann zudem vorgesehen sein, dass noch in einer Position der Brühkammer 03, in der diese dichtend an dem Brühkopf 04 anliegt eine Entspannung des Hydraulikzylinders 07 stattfindet, während das Auslassventil 14 bereits wieder in die Bypassstellung vorgespannt ist und dadurch der Umgehungskanal geöffnet ist, selbst wenn das Auslassventil 14 selbst verschlossen bleibt. Durch das Entspannen des Hydraulikzylinders 07 vergrößert sich das Volumen der Brühkammer 03 und es entsteht ein Unterdruck oder Sog, der über den Umgehungskanal vorbei am Auslassventil auf den Auslauf 15 wirkt. Damit kann zum Beispiel Restgetränk im Auslauf 15 in die Brühkammer 03 zurück gesogen werden und anschließend mit dem Getränkesubstratmehl 09 oder Trester entsorgt werden.

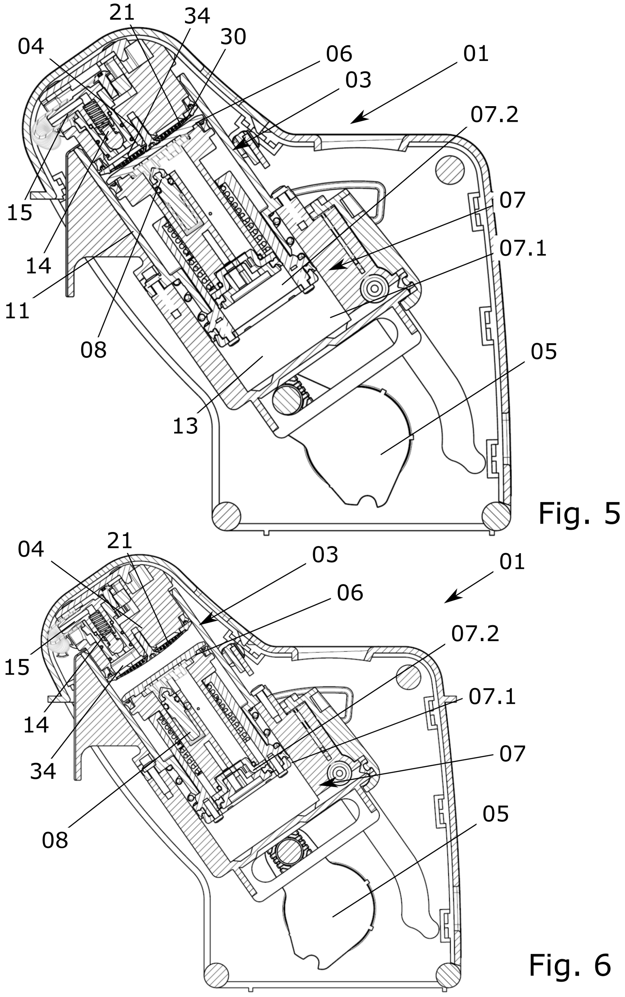

In der Fig. 5 ist eine erste Spülposition der Brüheinheit und/oder der Brühkammer dargestellt. Über die Antriebsmechanik 05 wird die ersten Spülposition der Brühkammer 03 erreicht. In der ersten Spülposition der Fig. 5 ist das Auslassventil 14, insbesondere ein Cremaventil, des Brühkopfes 04, bevorzugt durch die Position der Brühkammer 03 selbst über der Umgehungskanal 34 umgehbar, sodass eine Spülung der Brühkammer 03 ermöglicht wird, ohne dass ein Innendruck in der Brühkammer 03 aufgebaut wird. Dabei wird beim Einströmen von Hydraulikfluid in die Hydraulikzylinder 07.1, 07.2 eine Verstellung beider Hydraulikzylinder bewirkt, weil, ähnlich wie in der Situation der Fig. 4, durch das geöffnete Auslassventil 14 und in Ermanglung von Wiederstand durch Getränkesubstratmehl 09 kein Gegendruck auf die Hydraulikzylinder wirkt. Der Brühkammerboden 06 wird fast bis an eine Innenoberfläche 21 des Brühkopfes 04 verstellt, bis er an einer Anschlagsfläche 30 zur Anlage kommt. Dann öffnet abermals beim Überschreiten des Grenzdrucks des Überdrückventils 08 die Fluidverbindung zwischen Hydraulikzylinder 07 und Brühkammer 03 und die Spülung kann mit minimalem Volumen durchgeführt werden. Wie unten noch beschreiben, entspricht die erste Spülposition von der Funktion und/oder von der Position der Brühkammer im Wesentlichen der drucklosen Brühposition.

In der Fig. 6 ist eine zweit Spülposition der Brüheinheit und/oder der Brühkammer dargestellt. Die Position der Brühkammer 03 und der Antriebsmechanik 05 entspricht im Wesentlichen der Crema-Brühposition. Der Hauptunterschied besteht darin, dass kein Getränkesubstratmehl 09 in der Brühkammer 03 eingefüllt ist. Es kommt beim Pumpen von Hydraulikfluid oder Brühfluid in die Brüheinheit 01 dazu, dass sich bei der anfänglichen Verstellung des ersten Hydraulikzylinders 07.1 in der verschlossenen Brühkammer 03, bei der der Umgehungskanal 34 des Auslassventils 14 verschlossen ist und das Auslassventil als Gegendruckventil wirkt, ein verdichtetes Luftkissen ausbildet/ansammelt, was ähnlich wirkt, wie Getränkesubstratmehl. Dadurch wird sichergestellt, dass der zweite Hydraulikzylinder 07.2 nicht aktiviert wird und das Gegendruckventil 08 bereits öffnet, wenn zwischen Brühkopf 04, insbesondere Innenoberfläche 21 und Brühkammerboden 06 noch ein merklicher Abstand besteht und dadurch auch ein größeres Brühkammervolumen mit mehr Spülfluid gespült wird. Dadurch kann besser oder effektiver Wärme an die Brühkammer abgegeben werden, weshalb sich die zweite Spülposition besonders für eine Initialspülung beim Einschalten der Getränkezubereitungsvorrichtung eignet, um die Brühkammer 03 vorzuwärmen und anschließend ein Getränk mit ausreichend hoher Temperatur erzeugen zu können.

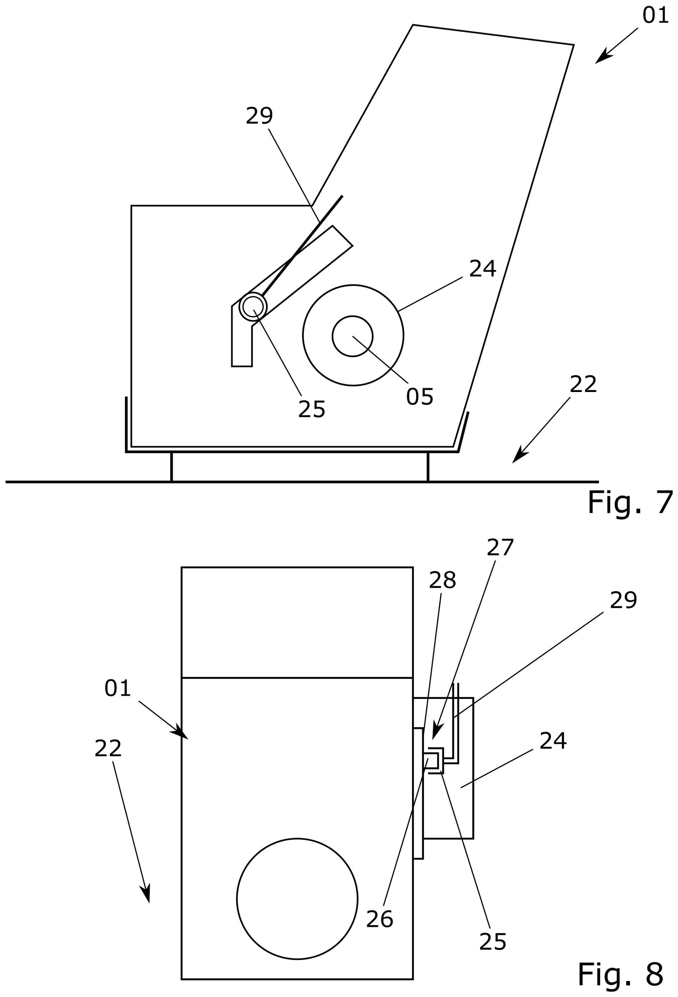

Fig. 7 zeigt eine Seitenansicht einer Brüheinheit 01, die in eine Getränkezubereitungsvorrichtung 22 eingesetzt ist. Bei dem Beispiel der Fig. 7 handelt es sich um eine Ausführungsform mit einem elektrischen Antrieb. Es kann alternativ jedoch auch vorgesehen sein, dass der Antrieb manuell und/oder handbetrieben ausgeführt ist. Es sind nur gewisse Teile der Getränkezubereitungsvorrichtung 22 gezeigt, nämlich der elektromotorische Antrieb 24 und eine geräteseitige Koppelstelle 25, einer Fluidzuleitung 29 der Getränkezubereitungsvorrichtung 22. Die Koppelstelle 25 ist passiv ausgebildet und wird nicht aktiv bewegt oder angetrieben. Der Antrieb 24 ist mit der Antriebsmechanik 05 der Brüheinheit 01 lösbar gekoppelt und bewirkt die Verstellung der nicht im Detail dargestellten Brühkammer, wie vorangehend beschrieben.

Fig. 8 zeigt in einer Draufsicht auf die eingesetzte Brüheinheit 01 die Kopplung zwischen der geräteseitigen Koppelstelle 25 und der Koppelstelle 26 der Brüheinheit 01. Die Kopplung mittels der Koppelstellen 25, 26 wird als Steckverbindung 27 ausgebildet, wobei die Kopplung permanent besteht, solange die Brüheinheit 01 in der Getränkezubereitungsvorrichtung 22 eingesetzt ist. Die Kopplung wird nicht abhängig von der Position der Brühkammer 03 in der Brüheinheit 01 hergestellt und gelöst. Der Antrieb 24 wirkt auf die nicht dargestellte Antriebsmechanik. Diese wirkt auf die Brühkammer 03, mit der die Koppelstelle 26 unbeweglich verbunden ist. Damit verursacht der Antrieb 24 die Bewegung der Koppelstelle 26, insbesondere entlang der Führung 28. Wenn die Brüheinheit 01 - zum Beispiel zu Reinigungszwecken - aus der Getränkezubereitungsvorrichtung 22 entnommen wird, wird die Kopplung der Koppelstellen 25, 26 gelöst.

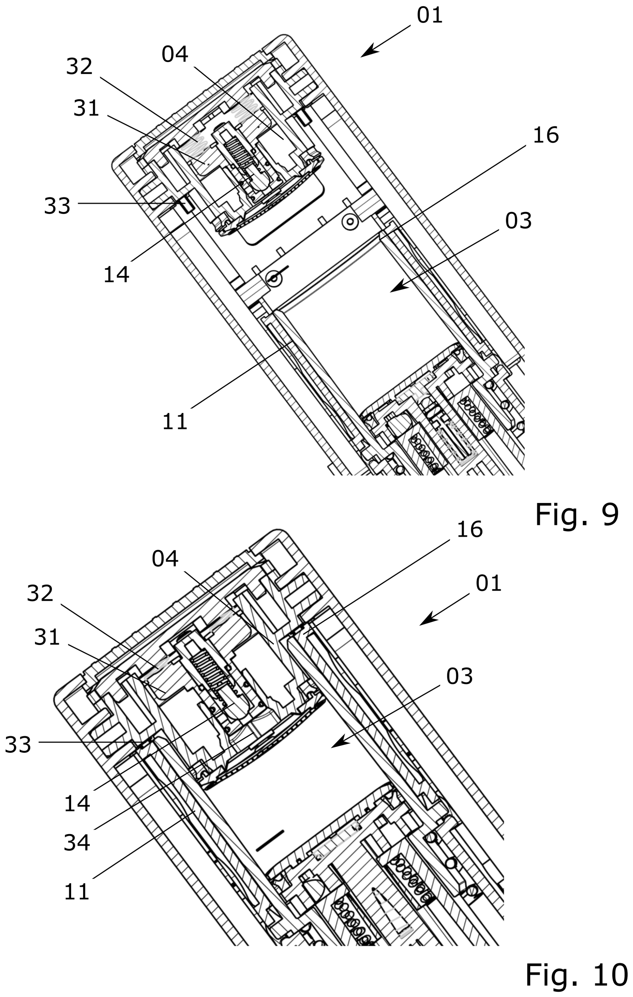

Die Fig. 9 zeigt einen Ausschnitt aus einer erfindungsgemäßen Brüheinheit 01 im Bereich des Brühkopfes 04. Es ist zu erkennen, dass das Auslassventil 14, welches als Gegendruckventil ausgebildet ist und als Cremaventil fungiert oder wirkt, in ein Aufnahmebauteil 31 aufgenommen ist. Das Aufnahmebauteil 31 ist über ein Rückstellmechanismus 32, bevorzugt Wendelfedern, auf die Brühkammer 03 zu vorgespannt und hält ohne äußere Einflüsse das Auslassventil 14 in einer dargestellten Bypassstellung, in der das Auslassventil 14 über einen Umgehungskanal 34 umgehbar ist. Das Aufnahmebauteil 31 ist mit seitlichen Mitnehmern 33 verbunden. Alternativ können die seitlichen Mitnehmer 33 auch einstückig, bevorzugt monolithisch mit dem Aufnahmebauteil 31 ausgebildet sein. Die Mitnehmer 33 übertragen dementsprechend eine Kraft auf den Rückstellmechanismus 32. Wenn eine Mindestkraft an den Mitnehmern 33 anliegt, führt dies dazu, dass das gesamte Aufnahmebauteil 31 mit samt des Auslassventils 14 angehoben wird. Dadurch schließt sich der Umgehungskanal 34 der Brühkammer 03 zum Auslauf 15 - in der Fig. 9 nicht im Detail dargestellt - und das Auslassventil 14 wird dadurch als Ventil, bevorzugt als Gegendruckventil, aktiviert. Die Mitnehmer 33 sind so positioniert, dass ein oberer Rand 16 der Brühkammerwand 11 durch eine Verstellung der Antriebsmechanik an den Mitnehmern 33 zur Anlage kommen kann und bei einer weiteren Verstellung der Brühkammer 03 gegenüber dem Brühkopf 04 die Rückstellkraft des Rückstellmechanismus 32 überwinden kann.

Kommt die Brühkammerwand 11 dichtend an dem Brühkopf 04 zur Anlage, ohne dass die Mitnehmer 33 betätigt werden, dann befindet sich die Brühkammer in der drucklosen Brühposition. Das Auslassventil 14 ist über den Umgehungskanal 34 umgehbar und in der Brühkammer 03 kann sich kein Druck oder Überdruck aufbauen. Eine ähnliche oder identische Situation kann in der ersten Spülposition der Brühkammer 03 vorliegen.

Die Crema- Brühposition und/oder zweite Spülposition der Brühkammer 03 wird nachfolgend beschrieben.

In der Fig. 10 ist dargestellt, wie die Brühkammer 03, insbesondere der obere Rand 16 der Brühkammerwand 11 die Mitnehmer 33 des Aufnahmebauteils 31 nicht nur kontaktiert, sondern auch bereits verstellt hat. Der Rückstellmechanismus 32 ist dementsprechend komprimiert. Brühkammer 03, Aufnahmebauteil 31 und/oder das Auslassventil 14 sind in einer End- oder Anschlagsstellung/Anschlagsposition. Das Auslassventil 14 ist insgesamt zusammen mit dem Aufnahmebauteil 31 zurückversetzt und abgehoben worden, wodurch ein der Umgehungskanal verschlossen wird, der vom Inneren der Brühkammer 03 zu einem nicht dargestellten Auslauf führt. Das Auslassventil 14 ist folglich aktiviert und nicht länger umgehbar.

Das Auslassventil 14 öffnet erst beim Überschreiten eines Innendrucks oder Überdrucks in der Brühkammer 03.

Die Position der Brühkammer 03, wie in Fig. 10 dargestellt, wird dabei ausschließlich und allein durch die Antriebsmechanik der Brüheinheit 01 hergestellt oder verursacht. Dementsprechend ist die Position unabhängig von sonstigen Komponenten und Zuständen der Brüheinheit einstellbar oder erreichbar. Dies ermöglicht maximale Flexibilität und ermöglicht die Öffnung und den Verschluss des Umgehungskanals des Auslassventils 14 zu ansatzweise beliebigen Zeitpunkten oder Situationen während des Betriebs der Getränkezubereitungsvorrichtung. Die Position der Fig. 10 kann mit minimalen Kräften erreicht werden, weil nur die kleinen Rückstellkräfte des Rückstellmechanismus 32 überwunden werden müssen.

Sobald die Antriebsmechanik die Brühkammer 03 wieder vom Brühkopf 04 entfernt, noch während die Brühkammerwand 11 dichtend am Brühkopf 04 anliegt, werden die Mitnehmer 33 mitsamt des Aufnahmebauteils 31 vom Rückstellmechanismus 32 wieder in Richtung der Brühkammer 03 verstellt und in die Bypassstellung des Auslassventils vorgespannt. Dadurch wird der Umgehungskanal 34 wieder geöffnet. Der Wechsel zwischen Crema-Brühposition und druckloser Brühposition kann auch während eines ununterbrochenen Brühvorgangs erfolgen, um so noch weitere Getränkevariationen zu ermöglichen.

### Bezugszeichen

- 01: Brüheinheit
- 02: Gehäuse
- 03: Brühkammer
- 04: Brühkopf
- 05: Antriebsmechanik
- 06: Brühkammerboden
- 07: Hydraulikzylinder
- 08: Gegendruckventil
- 09: Getränkesubstratmehl
- 10: Befüllöffnung
- 11: Brühkammerwand
- 12: Führung
- 13: Bereich des Hydraulikzylinders
- 14: Auslassventil
- 15: Auslauf
- 16: Rand
- 17: Auswerfer
- 18: Hebel
- 19: Bodenteil
- 20: Magnet
- 21: Innenoberfläche
- 22: Getränkezubereitungsvorrichtung
- 24: Antrieb
- 25: Koppelstelle der Getränkezubereitungsvorrichtung
- 26: Koppelstelle der Brüheinheit
- 27: Steckverbindung
- 28: Führung
- 29: Fluidzuleitung der Getränkezubereitungsvorrichtung
- 30: Anschlagfläche

- 31: Aufnahmebauteil
- 32: Rückstellmechanismus
- 33: Mitnehmer
- 34: Umgehungskanal

## Patentansprüche

1. Brüheinheit (01) für eine Getränkezubereitungsvorrichtung (22), insbesondere einen Kaffee- und/oder Espressovollautomaten, mit einer Antriebsmechanik (05) zum Verschwenken und/oder linearen Verfahren einer Brühkammer (03) zwischen mehreren Positionen, wobei die Brühkammer (03) einen verschiebbar gegenüber einer Brühkammerwand (11) gelagerten Brühkammerboden (06) aufweist, wobei die Antriebsmechanik (05) eingerichtet ist, um die Brühkammerwand (11) zur dichtenden Anlage an einem Brühkopf (04) zu bringen,
**dadurch gekennzeichnet,**
**dass** die Antriebsmechanik (05) zum Erreichen einer drucklosen Brühposition der Brühkammer (03), eingerichtet ist, wobei die Antriebsmechanik (05) so ausgebildet ist, dass allein über die Antriebsmechanik (05) die Brühkammer (03) in die drucklose Brühposition überführbar ist, wobei in der drucklosen Brühposition die Brühkammerwand (11) dichtend am Brühkopf (04) anliegt und einem Auslassventil (14), insbesondere ein Cremaventil, ein Umgehungskanal (34) zugeordnet ist, durch den Fluid das Auslassventil (14) umgehen kann, insbesondere ohne, dass das Auslassventil (14) in eine Öffnungsstellung überführt ist, und das Auslassventil (14) in der drucklosen Brühposition der Brühkammer (03) in eine Bypassstellung vorgespannt ist, in der der Umgehungskanal (34) geöffnet ist, sodass während eines Brühvorgangs kein Innendruck in der verschlossenen Brühkammer (03) aufbaubar ist.

2. Brüheinheit nach Anspruch 1,
**dadurch gekennzeichnet**,
wenigstens ein Hydraulikzylinder (07) vorgesehen ist, der den Brühkammerboden (06) vor und/oder während der Getränkeherstellung in Richtung des Brühkopfes (04) kraftbeaufschlagt.

3. Brüheinheit nach Anspruch 1 oder 2,
**dadurch gekennzeichnet,**
**dass** der Hydraulikzylinder (07) derart ausgebildet ist, dass eine Verstellung des Brühkammerbodens (06) bis zu einem oberen Rand (16) der Brühkammerwand (11) möglich ist.

4. Brüheinheit nach Anspruch 2 oder 3,
**dadurch gekennzeichnet,**
**dass** in einem ersten Hydraulikzylinder (07) ein zweiter Hydraulikzylinder angeordnet ist, der zusammen mit dem ersten Hydraulikzylinder (07) eine teleskopartige Verstellung des Brühkammerbodens (06) ermöglicht, wobei die Hydraulikzylinder (07) gemeinsam eine Verstellung des Brühkammerbodens (06) bis zu einem oberen Rand (16) der Brühkammerwand (11) ermöglichen.

5. Brüheinheit nach einem der Ansprüche 2 bis 4,
**dadurch gekennzeichnet,**
**dass** der erste Hydraulikzylinder (07) und/oder der zweite Hydraulikzylinder einen, bevorzugt gemeinsamen, Fluideinlass aufweisen, der fluidleitend mit einer Fluidzuleitung (29) der Getränkezubereitungsvorrichtung (22) verbindbar ist, wobei die Hydraulikzylinder (07) mit einem ausgangsseiteigen Gegendruckventil (08) versehen sind, das in fluidleitender Verbindung mit der Brühkammer (03) ausgebildet ist, welches beim Überschreiten eines Grenzdrucks die Zufuhr von Fluid in die Brühkammer (03) freigibt, sodass Fluid aus dem/den Hydraulikzylinder(n) (07) abfließt und in die Brühkammer (03) einströmt.

6. Brüheinheit nach einem der vorangehenden Ansprüche,
**dadurch gekennzeichnet,**
**dass** der Fluideinlass unverzweigt mit einer Fluidzuleitung (29) einer Getränkezubereitungsvorrichtung (22) verbunden ist.

7. Brüheinheit nach einem der vorangehenden Ansprüche,
**dadurch gekennzeichnet,**
**dass** die Antriebsmechanik (05) zur Verstellung der Brühkammer (03) in eine Crema-Brühposition eingerichtet ist, wobei die Antriebsmechanik (05) so ausgebildet ist, dass allein über die Antriebsmechanik (05), insbesondere ohne Verstellung der/des Hydraulikzylinder(s) (07) die Brühkammer (03), insbesondere die Brühkammerwand (11), zur dichtenden Anlage an dem Brühkopf (04) bringbar ist, wobei der Umgehungskanal (34) des Auslassventils (14) geschlossen ist und das Auslassventil (14) nur in eine Öffnungsstellung überführbar ist, wenn im Inneren der Brühkammer (03) ein vorgegebener Überdruck existiert.

8. Brüheinheit nach einem der vorangehenden Ansprüche,
**dadurch gekennzeichnet,**
**dass** die Brühkammer (03), bevorzugt die Brühkammerwand (11), das Auslassventil (14), insbesondere aus der Bypassstellung, in eine geschlossene Position überführt und den Umgehungskanal schließt, wenn die Antriebmechanik (05) die Brühkammer (03) in die Crema-Brühposition, verstellt.

9. Brüheinheit einem der vorangehenden Ansprüche,
dass beim Überführen der Brühkammer (03) in die Crema-Brühposition die Brühkammerwand (11), bevorzugt ein oberer Rand (16) der Brühkammerwand (11) einen unmittelbar mit dem Auslassventils (14) verbundenen Mitnehmer (33) verstellt, der wiederum das Auslassventil (14) gegen einen Rückstellmechanismus (32) , insbesondere aus der Bypassstellung, verstellt, wobei die Verstellung des Auslassventils (14) den Umgehungskanal (34) verschließt.

10. Brüheinheit nach einem der vorangehenden Ansprüche,
**dadurch gekennzeichnet,**
**dass** die Antriebsmechanik (05) zum Erreichen einer ersten Spülposition der Brühkammer (03) eingerichtet ist, wobei die erste Spülposition der der drucklosen Brühposition entspricht (03).

11. Brüheinheit nach einem der vorangehenden Ansprüche,
**dadurch gekennzeichnet,**
**dass** während eines Spülens der Brühkammer (03) in einer ersten Spülposition der Brühkammer (03) der erste und/oder der zweite Hydraulikzylinder (07) befüllt sind und ein Abstand des Brühkammerboden (06) zum Brühkopf (04) minimiert ist, bevorzugt ein Abstand von weniger als 2mm, bevorzugt von weniger als 1 mm, vom Brühkammerboden (06) zum Brühkopf (04) gegeben ist.

12. Brüheinheit nach einem der vorangehenden Ansprüche,
**dadurch gekennzeichnet,**
**dass** die Antriebsmechanik (05) zum Erreichen einer zweiten Spülposition der Brühkammer (03) eingerichtet ist, wobei die zweite Spülposition der Crema-Brühposition entspricht.

13. Getränkezubereitungsvorrichtung (22), insbesondere Kaffee- und/oder Espressovollautomat, mit einer, insbesondere entnehmbaren, Brüheinheit (01) und einem fest verbauten Antrieb (24) zum Antrieb (24) einer Antriebsmechanik (05) der Brüheinheit (01), wobei der Antrieb (24) Kopplungsmittel zum, bevorzugt lösbaren, Koppeln mit der Brüheinheit (01) umfasst,
**dadurch gekennzeichnet,**
**dass** die Brüheinheit (01) nach einem der Ansprüche 1 bis 12 ausgebildet ist.

14. Verfahren zum Betrieb einer Brüheinheit (01) für eine Getränkezubereitungsvorrichtung (22), insbesondere einen Kaffee- und/oder Espressovollautomaten, mit einer Antriebsmechanik (05) zum Verschwenken und/oder linearen Verfahren einer Brühkammer (03) zwischen mehreren Positionen, wobei die Brühkammer (03) einen verschiebbar gegenüber einer Brühkammerwand (11) gelagerten Brühkammerboden (06) aufweist, wobei die Antriebsmechanik (05) eingerichtet ist, um die Brühkammerwand (11) zur dichtenden Anlage an einem Brühkopf (04) zu bringen,
**dadurch gekennzeichnet,**
**dass** die Antriebsmechanik (05) zum Erreichen einer drucklosen Brühposition der Brühkammer (03), eingerichtet ist, wobei die Antriebsmechanik (05) so ausgebildet ist, dass allein über die Antriebsmechanik (05) die Brühkammer (03) in die drucklose Brühposition überführt wird, wobei in der drucklosen Brühposition die Brühkammerwand (11) dichtend am Brühkopf (04) anliegt und ein Auslassventil (14), insbesondere ein Cremaventil, ein Umgehungskanal (34) zugeordnet ist, durch den Fluid das Auslassventil (14) umgeht, insbesondere ohne, dass das Auslassventil (14) in eine Öffnungsstellung überführt ist, und das Auslassventil (14) in der drucklosen Brühposition der Brühkammer (03) in eine Bypassstellung vorgespannt wird, in der der Umgehungskanal (34) geöffnet ist, sodass während eines Brühvorgangs kein Innendruck in der verschlossenen Brühkammer (03) aufgebaut wird.

15. Verfahren nach Anspruch 14,
**dadurch gekennzeichnet,**
**dass** die Antriebsmechanik (05) die Brühkammer (03) in eine alternative Crema-Brühposition verstellt, wobei die Antriebsmechanik (05) so ausgebildet ist, dass allein über die Antriebsmechanik (05 die Brühkammer (03), insbesondere die Brühkammerwand (11), zur dichtenden Anlage an dem Brühkopf (04) gebracht wird, wobei der Umgehungskanal (34) des Auslassventils (14) geschlossen wird und das Auslassventil (14) nur in eine Öffnungsstellung überführt wird, wenn im Inneren der Brühkammer (03) ein vorgegebener Überdruck erzeugt wird.

16. Verfahren nach Anspruch 15,
**dadurch gekennzeichnet,**
**dass** die Brühkammer (03), bevorzugt die Brühkammerwand (11), das Auslassventil (14), insbesondere aus der Bypassstellung, in eine geschlossene Position überführt und den Umgehungskanal (34) schließt, wenn die Antriebmechanik (05) die Brühkammer (03) in die Crema-Brühposition, verstellt.

17. Verfahren nach Anspruch 15 oder 16,
**dadurch gekennzeichnet,**
**dass** beim Überführen der Brühkammer (03) in die Crema-Brühposition die Brühkammerwand (11), bevorzugt ein oberer Rand (16) der Brühkammerwand (11) einen unmittelbar mit dem Auslassventils (14) verbundenen Mitnehmer (33) verstellt, der wiederum das Auslassventil (14) gegen einen Rückstellmechanismus (32) , insbesondere aus der Bypassstellung, verstellt, wobei die Verstellung des Auslassventils (14) den Umgehungskanal (34) verschließt.

18. Verfahren nach einem der Ansprüche 14 bis 17,
**dadurch gekennzeichnet,**
**dass** über eine Nutzereingabe, insbesondere zur Initiierung eines Brühvorgangs und/oder einer Auswahl eines Getränks, festlegt wird, ob die Antriebsmechanik (05) im Lauf der Brühvorgangs die Brühkammer (03) in die Crema-Brühposition und/oder die drucklose Brühposition verstellt.

19. Verfahren nach einem der Ansprüche 14 bis 18,
**dadurch gekennzeichnet,**
**dass** wenigstens ein Hydraulikzylinder (07) vorgesehen ist, der den Brühkammerboden (06) vor und/oder während der Getränkeherstellung in Richtung des Brühkopfes (04) kraftbeaufschlagt, wobei die drucklose Brühposition und/oder die Crema-Brühposition erreicht wird ohne Verstellung des Hydraulikzylinders (07).
